# EUROPEAN PATENT APPLICATION

(11) **EP 2 423 935 A2**
(43) Date of publication of application: **29.02.2012**
(21) Application number: 11002144.1
(22) Date of filing: 15.03.2011
(51) Int. Cl.: H01H 13/85

(54) **Portable terminal**

(30) Priority: 30.08.2010 KR 20100084412
(71) Applicant: LG Electronics Inc., Seoul (KR)
(72) Inventor: Jung, Jaejun, Seoul (KR); Lee, Sangjin, Seoul (KR)
(74) Representative: Thum, Bernhard

(57) **Abstract**

A portable terminal includes a first substrate (241), a circuit pattern unit (242) formed on an upper surface of the first substrate to configure a circuit, the circuit pattern unit having at least one dome contact portion (242a,242b) and a second substrate (243) laminated on the circuit pattern unit and having at least one dome mounting groove (244) to expose the dome contact portion and having a conductive dome (230) formed to be contactable with the dome contact portion, whereby a thickness of a printed circuit board used in an input device of the portable terminal can be reduced.

## Description

### BACKGROUND OF THE INVENTION

### 1. Field of the Invention

This specification relates to a portable terminal having a printed circuit board capable of configuring a slim keypad.

### 2. Background of the Invention

Terminals may be divided into mobile/portable terminals and stationary terminals according to their mobility. Also, the mobile terminals may be categorized into a handheld terminal and a vehicle mount terminal according to whether it is directly portable by a user.

As it becomes multifunctional, the terminals can be allowed to capture still images or moving images, play music or video files, play games, receive broadcast and the like, so as to be implemented.

For supporting and enhancing functions of those terminals, improvement of a terminal structure (configuration) may be considered.

### SUMMARY OF THE INVENTION

Therefore, to recognize the consideration, an aspect of the detailed description is to provide a fabrication method for a portable terminal, capable of simplifying fabrication processes with maintaining rigidity of a printed circuit board, in view of making the printed circuit board slimmer.

To achieve these and other advantages and in accordance with the purpose of this specification, as embodied and broadly described herein, there is provided a portable terminal including a first substrate having printed layers and insulating layers, a circuit pattern unit formed on an upper surface of the first substrate to configure a circuit, the circuit pattern unit having at least one dome contact portion, a second substrate laminated on the circuit pattern unit and having at least one dome mounting groove to expose the dome contact portion, and a conductive dome formed to be contactable with the dome contact portion.

In one exemplary embodiment, the portable terminal may further include at least one eject hole formed through the first substrate and the circuit pattern unit.

In one exemplary embodiment, the portable terminal may further include a groove extending portion(245) formed by extending an inner wall of each dome mounting groove on the second substrate such that the at least one dome contact portion is simultaneously exposed.

In one exemplary embodiment, a stopper may be formed adjacent to the dome contact portion of the circuit pattern unit, so as to define a reference surface such that the depth of the dome mounting groove can be adjusted.

In one exemplary embodiment, a white printed layer may be formed on the second substrate.

In one exemplary embodiment, the portable terminal may further include a light guide film attached onto the white printed layer.

In one exemplary embodiment, an adhesive layer may be disposed on one surface of the light guide film, and an upper portion of the conductive dome may be attached onto the adhesive layer.

In one exemplary embodiment, the first or second substrate may be a flexible circuit board.

To achieve the above aspect of this specification, a method for fabricating a portable terminal may include forming a first substrate by laminating at least one printed layer and at least one insulating layer, forming a circuit pattern unit to configure a circuit, the circuit including at least one dome contact portion and a stopper on the first substrate, attaching a different type of film on upper surfaces of the dome contact portion and the stopper, laminating a second substrate on the circuit pattern unit, and processing the second substrate formed on the dome contact portion such that the dome contact portion is exposed.

In one exemplary embodiment, the processing of the second substrate may be configured to cut off an upper surface of the second substrate having the dome contact portion thereon, using a cutting tool, such that the dome contact portion is exposed.

In one exemplary embodiment, the processing of the second substrate may be configured to separate the second substrate by forming an eject hole through the first substrate to be contactable with the dome contact portion and pushing up the second substrate by using a tool, which is inserted through the eject hole.

In one exemplary embodiment, the processing of the second substrate may include forming a groove extending portion by grouping dome mounting grooves of the second substrate such that the at least one dome contact portion is simultaneously exposed, so as to minimize the number of eject holes, and processing the groove extending portion using the cutting tool.

In one exemplary embodiment, a laser may be employed as the cutting tool, and the stopper may be made of copper.

In one exemplary embodiment, the method may further include forming a white printed layer on the second substrate to facilitate light reflection or light refraction

In one exemplary embodiment, the method may further include mounting the conductive dome in the dome mounting groove.

In one exemplary embodiment, the method may further include forming a light guide film on the white printed layer and the conductive dome.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.
In the drawings:
- FIG. 1: is a perspective view showing a closed configuration of a portable terminal in accordance with one exemplary embodiment;
- FIG. 2: is a perspective view showing an open configuration of the portable terminal of FIG. 1;
- FIG. 3: is a rear perspective view of the portable terminal of FIG. 2;
- FIG. 4: is a block diagram of the portable terminal;
- FIG. 5: is a sectional view taken along the line IV-IV of FIG. 1;
- FIG. 6: is a partial perspective view showing a keypad and a printed circuit board of the portable terminal of FIG. 5;
- FIG. 7: is a sectional view showing a structure of a non-concave printed circuit board;
- FIG. 8: is a sectional view of a keypad of a concave printed circuit board in accordance with one exemplary embodiment;
- FIG. 9: is a plane view showing a dome contact portion and a hole of the concave printed circuit board in accordance with the one exemplary embodiment;
- FIG. 10: is a plane view showing the printed circuit board of a portable terminal in accordance with one exemplary embodiment; and
- FIGS. 11 to 14: are sectional views sequentially showing a fabrication method for a portable terminal in accordance with one exemplary embodiment.

### DETAILED DESCRIPTION OF THE INVENTION

Description will now be given in detail of a portable terminal with reference to the accompanying drawings. Hereinafter, suffixes "module" and "unit or portion" for components used herein in description are merely provided only for facilitation of preparing this specification, and thus they are not granted a specific meaning or function.

This specification employs like/similar reference numerals for like/similar components irrespective of different embodiments, so they all will be understood by the first description. The expression in the singular form in this specification will cover the expression in the plural form unless otherwise indicated obviously from the context.

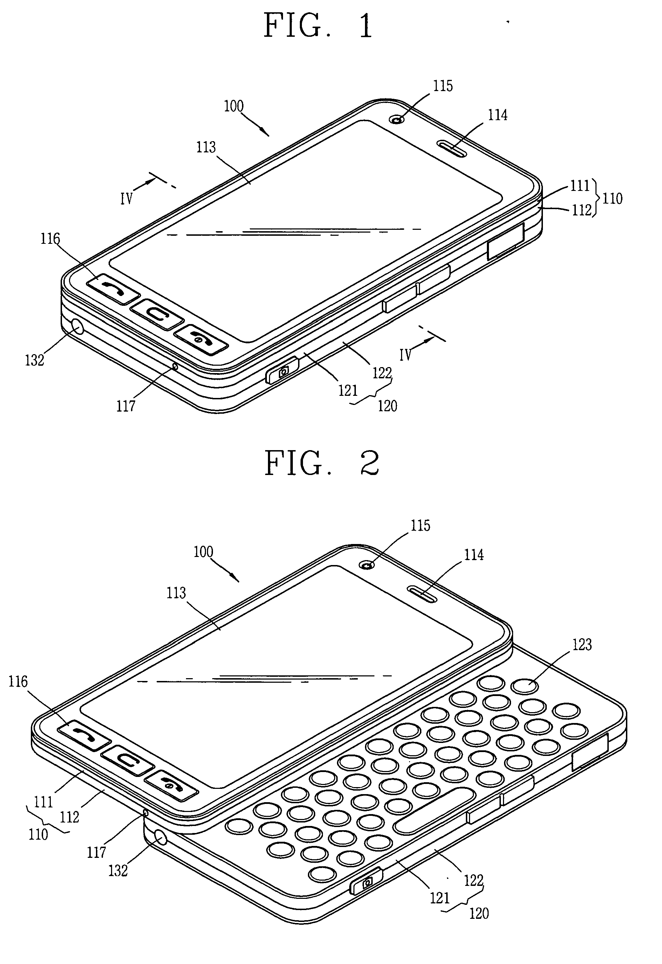

FIGS. 1 and 2 are perspective views each showing an upper surface of a portable terminal in accordance with one exemplary embodiment. FIG. 1 shows a closed configuration of the portable terminal and FIG. 2 shows an open configuration of the portable terminal.

As shown in FIGS. 1 and 2, a portable terminal 100 may include a first body 110 and a second body 120 movably (slidably) coupled to each other. The portable terminal 100 shown in FIGS. 1 and 2 is exemplarily embodied, but not limited, to implement the open configuration by a widthwise (horizontal) sliding motion. Also, this specification may be applicable to an example of implementing the open configuration by a lengthwise (vertical) sliding motion.

An overlapped state between the first body 110 and the second body 120 as shown in FIG. 1 may be referred to as a closed configuration, and a state where the first body 110 is slid in one direction to expose at least part of the second body 120 as shown in FIG. 2 may be referred to as an open configuration. This exemplary embodiment illustrates, but is not limited to, a sliding motion as 'movement' of the first body 110 with respect to the second body 120. For example, one of the first and second bodies 110 and 120 may be implemented to be swung or swiveled with respect to another. The portable terminal 100 may typically operate in an idle mode in the closed configuration but the idle mode may be released by a user's manipulation. Also, the portable terminal 100 may typically operate in a call-communication mode in the open configuration but such mode may be converted into the idle mode according to the user's manipulation or after a certain time duration.

Various arrangements of functionalities or components, which may be disposed on the upper surfaces of the first and second bodies 110 and 120, may be derived according to which function is to be emphasized or which user interface is to be pursued. As one example, a display unit 113 may be installed on the upper surface of the upper body 110, as shown in FIG. 2, and a second manipulation unit 123 for inputting control command and the like may be installed on the upper surface of the lower body 120.

Referring to FIG. 1, a case (housing, casing, cover or the like) configuring an external appearance may be formed with a front case 111 and a rear case 112. Various electronic components may be installed in a space formed by the front and rear cases 111 and 112. At least one intermediate case may further be disposed between the front and rear cases 111 and 112. The cases 111 and 112 may be injected using a synthetic resin or be formed of a metal, such as stainless steel (STS), titanium (Ti) or the like.

The first body 110, in detail, the front case 111 is shown having a display unit 113, an audio output unit 114, a first image input unit 115, a first manipulation unit 116, an audio input unit 117 and the like.

The display unit 113 may be configured to display visible information. The display unit 151 may include a display module, for example, a Liquid Crystal Display (LCD) module, an Organic Light Emitting Diode (OLED) module, a Transparent OLED (TOLED) module and the like.

The display unit 113 may further include a touch screen to allow a user's touch input. For call connection, the display unit 113 may output touch-inputtable numeral keys.

The display unit 113 may be configured to generate various tactile effects, which a user can feel upon generating touch input, which may be implemented by a haptic module cooperating with the display unit 113. A representative example of the tactile effects generated by the haptic module includes vibration. The haptic module may be disposed in various manners according to the type of configuration of the portable terminal 100 as well as the display unit 113.

The audio output unit 114 may be implemented as a receiver or a speaker. The first image input unit 115 may be implemented as a type of a camera module for allowing a user to capture still images or moving images. The first manipulation unit 116 may be configured to receive commands for controlling operations of the portable terminal 100. The audio input unit 117 may be a microphone. The audio input unit 117 may be disposed to be symmetrical to the audio output unit 114 based upon the display unit 113.

Similar to the first body 110, the second body 120 is shown having a front case 121 and a rear case 122. A second manipulation unit 123 (see FIG. 2) may be disposed on the second body 120, in detail on a front face of the front case 121.

A broadcast signal receiving antenna 132 for call communications may be disposed at one side of the second body 120. The antenna 132 may be retractable into the second body 120.

Referring to FIG. 2, when the first body 110 is slid from the second body 120, the second manipulation unit 123 disposed on the front face of the second body 120, which is overlapped with the first body 110 in the closed configuration (i.e., the state shown in FIG. 1), is exposed externally.

Various types of contents output on the display unit 113 may be input by keys of the exposed second manipulation unit 123. The second manipulation unit 123 may include letter (character) keys (Korean consonants and vowels / English alphabets) and numeral keys. The letter keys may be disposed in QERTY arrangement such that a user can easily write (compose) text messages, memos, emails and the like, for example, in English.

If the second manipulation unit 123 is configured as a touch screen, icons of functional keys may be output on an exposed portion of the touch screen to be touch-inputtable. For example, if a video (moving picture) is output on the display unit 113, the functional keys may be configured to receive commands for performing functions, such as pause, reproduction, forward, displaying of a reproduction list and the like.

The above description has been given of the second manipulation unit 123 being disposed on the front face of the second body 120, but the structure may not be limited to that. For example, a second display unit, which cooperatively works with the display unit 113 may be disposed on the front face of the second body 120.

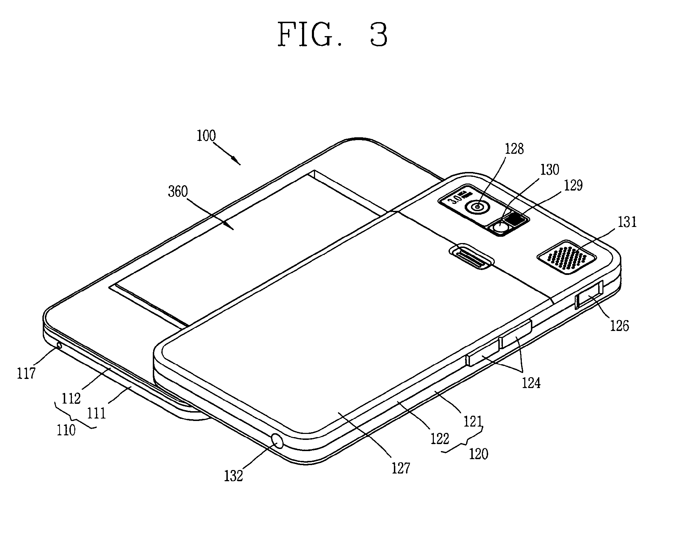

FIG. 3 is a rear perspective view of the portable terminal 100 shown in FIG. 2.

Referring to FIG. 3, a third manipulation unit 124, an interface 126 and the like may be disposed at a side surface parallel to (facing) the principal surface of the second body 120.

The first to third manipulation units 116, 123 and 124 may be referred to as a user input unit. Such user input unit can employ any tactile manner that a user can touch or tap for manipulation.

For example, the user input unit may be implemented as a dome switch, a touch screen, a touchpad or the like by which a user can input commands or information in a pushing or touching manner. Alternatively, the user input unit may be implemented as a wheel or a jog, which rotates keys or a joystick.

From the functional perspective, the first manipulation unit 116 may be configured to input commands such as START, END, SCROLL or the like, and the second manipulation unit 123 may be configured to input numbers, letters (characters), symbols or the like. Also, the third manipulation unit 124 can be worked as a hot key which performs a specific function, such as activating the first image input unit 115 and the like.

The interface 126 may serve as a path through which the portable terminal 100 can exchange data or the like with external devices. For example, the interface 126 may be at least one of wired/wireless earset connection terminals, ports for short-range communication (e.g., Infrared (IrDA) port, Bluetooth™ port, a wireless Lan (WLAN) port and the like), power supply terminals for supplying power to the portable terminal 100 and the like.

The interface 126 may be a card socket for accommodating external cards, such as a subscriber identification module (SIM) or a user identity module (UIM), a memory card for storage of information and the like.

A power supply unit 127 for supplying power to the portable terminal 100 may be mounted at the second body 120. The power supply unit 127 may be a rechargeable battery, which can be detachably coupled for charging or the like.

A second image input unit 128 may further be disposed at the rear case 122 of the second body 120. The second image input unit 128 may face a direction which is substantially opposite to a direction faced by the first image input unit 115 (see FIG. 1), and may have different pixels from those of the first image input unit 115.

For example, the first image input unit 115 may operate with relatively lower pixels (lower resolution). Thus, the first image input unit 115 may be useful when a user can capture his face and send it to another party during a video call or the like. On the other hand, the second image input unit 128 may operate with a relatively higher pixels (higher resolution) such that it can be useful for a user to obtain higher quality pictures for later use.

A flash 129 and a mirror 130 may additionally be disposed adjacent to the second image input unit 128. The flash 129 operates in conjunction with the second image input unit 128 when taking a picture using the second image input unit 128. The mirror 130 can cooperate with the second image input unit 128 to allow a user to photograph himself in a self-portrait mode.

A second audio output units 131 may further be disposed on the rear case 122.

The second audio output unit 131 can cooperate with the first audio output unit 114 (see FIG. 1) to provide stereo output. Also, the second audio output unit 131 may be configured to operate as a speakerphone.

The foregoing description has been given of the second image input unit 128 and the like being disposed on the rear case 122, but the configuration may not be limited to that. For example, it is also possible that one or more of those components, which have been described to be implemented on the rear case 122, will be implemented on the first body 101, particularly, on the rear case 112. In this configuration, the component(s) disposed on the rear case 112 can be protected by the second body 120 in a closed state of the portable terminal. In addition, without the second image input unit 128, the first image input unit 115 can be implemented to be rotatable so as to rotate up to a direction which the second image input unit 128 faces.

Referring to FIG. 3, in order for the first body 110 to be slid with respect to the second body 120, a slide module 360 may be connected between the first and second bodies 110 and 120. The slide module 360 may allow the first body 110 to be slid with respect to the second body 120 between the closed configuration and the open configuration.

If the first body 110 is slid further, an exposed area of the front face of the second body 120 may be wider. As the exposed area becomes wider, the hardware function of the terminal can be more enhanced. For example, the letters keys and the numeral keys of the second manipulation unit 123 (see FIG. 2) may be formed to be larger.

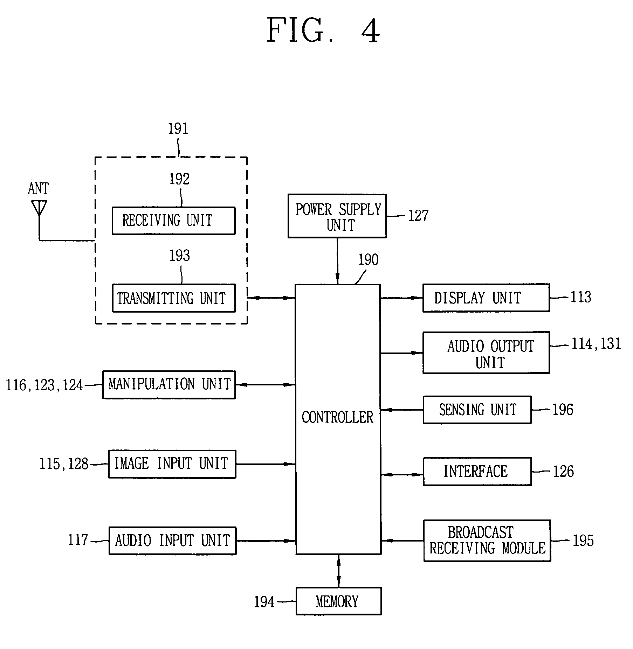

FIG. 4 is a block diagram of the portable terminal 100. Hereinafter, description will be given based upon the configuration of the portable terminal 100 in accordance with one exemplary embodiment. However, it can be inferred by an ordinary skilled person of the art that the present disclosure can be applied to a portable terminal according to another embodiment.

Referring to FIG. 4, the portable terminal 100 according to the one exemplary embodiment may include a wireless communication module 191, a user input unit 116, 123, 124, image input units 115 and 128, an audio input unit 117, a display unit 113, audio output units 114 and 131, a sensing unit 196, an interface 126, a broadcast receiving module 195, a memory 194, a power supply unit 127 and a controller 190.

The controller 190 typically controls the overall operations of the portable terminal 100. For example, the controller 190 may perform the control and processing associated with telephony calls, data communications, video calls, and the like. Also, the controller 190 may additionally control operations of the portable terminal 100 as well as the typical function control.

The wireless communication module 191 may send/receive wireless signals with a mobile communication base station via an antenna. For example, the wireless communication module 191 may include a transmitting unit 192 for handling transmission and reception of audio data, text data, image data and control data under the control of the controller 190 and modulating a signal to be sent for transmission, and a receiving unit 193 for demodulating a received signal.

The user input unit 116, 123, 124 may be configured, as shown in FIG. 1, thus to provide key input data, which a user inputs for control of operations of the terminal, to the controller 190.

The image input units 115 and 128 may process image frames of still pictures or video obtained by image sensors in a video call mode or a capturing mode. The processed image frames may be converted into a data format to be displayable on a display unit 113 so as to be displayed on he display unit 113. The image frames processed by the image input units 115 and 128 may be stored in the memory 194 or transmitted to the exterior via the wireless communication unit 191 under the control of the controller 190.

The audio input unit 117 may receive an external audio signal while the portable terminal 100 is in a particular mode, such as a phone call mode, a recording mode, a voice recognition mode, or the like. This audio signal is processed into digital data. The processed digital data is converted for output into a format transmittable to a mobile communication base station via the wireless communication module 191 in case of the phone call mode. In the recording mode, the processed audio data may be output to be stored in the memory 194.

The audio input unit 117 may include assorted noise removing algorithms to remove noise generated in the course of receiving the external audio signal.

The display unit 113 may output information processed in the portable terminal 100. For example, when the portable terminal 100 is operating in a phone call mode, the display unit 113 will provide a User Interface (UI) or a Graphic User Interface (GUI) which includes information associated with the call under the control of the controller 190. As another example, if the portable terminal 100 is in a video call mode or a capturing mode, the display unit 113 may additionally or alternatively display images captured and/or received, UI, or GUI. Meanwhile, if the display unit 113 is configured by including a touch screen, the display unit 113 may be used as an input device as well as an output device.

The audio output units 114 and 131 may convert audio data received from the wireless communication unit 191 or stored in the memory 194 in a call-receiving mode, a call-placing mode, a recording mode, a voice recognition mode, a broadcast reception mode, and so on, under the control of the controller 190, thereby outputting the converted data to the exterior.

Also, the audio output unit 114, 131 may output audio signals relating to functions performed in the portable terminal 100, e.g., sound alarming a call received or a message received, and so on. The audio output unit 114, 131 may include a receiver, a speaker, a buzzer, and so on.

The sensing unit 196 provides status measurements of various aspects of the portable terminal 100. For instance, the sensing unit 196 may detect an open/close status of the portable terminal 100, a change in a location of the portable terminal 100, a presence or absence of user contact with the portable terminal 100, the location of the portable terminal 100, acceleration/deceleration of the portable terminal 100, and the like, so as to generate a sensing signal for controlling the operation of the portable terminal 100. For example, regarding a slide-type mobile terminal, the sensing unit 196 may sense whether a sliding portion of the portable terminal 100 is open or closed and output the sensing result to the controller 190 so as to allow control of the operations of the portable terminal 100. Other examples include sensing functions, such as the sensing unit 196 sensing the presence or absence of power provided by the power supply 127, the presence or absence of a coupling or other connection between the interface 126 and an external device.

The interface 126 may generally be implemented to interface the portable terminal 100 with external devices. The interface 126 may include, for example, wired/wireless headset ports, external charger ports, wired/wireless data ports, card socket (for example, memory card, SIM/UIM card). The interface 126 may serve as a path for external data or power to be transferred to various components in the portable terminal 100 or internal data of the portable terminal 100 to be sent to an external device.

The memory 194 may store a program for the processing and control of the controller 190. Alternatively, the memory 160 may temporarily store input/output data (e.g., phonebook data, messages, still images, video and the like). Also, the memory 160 may store a program for controlling operations of the portable terminal 100. The memory 160 may be implemented using any type of suitable storage medium including a hard disk type, a memory card type (e.g., SD or DX memory), a flash memory type, Random Access Memory (RAM), Read-Only Memory (ROM), and the like.

The broadcast receiving module 195 may receive broadcast signals sent via satellite channels or terrestrial channels and convert them into broadcast data formats to be output to the display unit 113. Also, the broadcast receiving module 195 may receive additional data related to broadcasting (e.g., Electronic Program Guide (EPG), channel list, etc.). The broadcast data converted in the broadcast receiving module 195 and the additional data may be stored in the memory 194.

The power supply unit 127 provides power required by various components under the control of the controller 190. The provided power may be internal power, external power, or combination thereof.

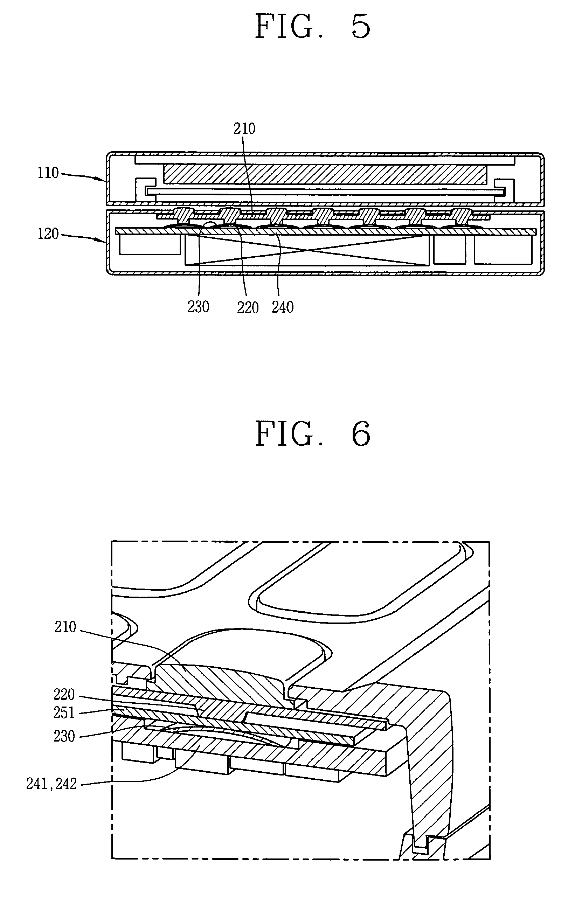

FIGS. 5 and 6 illustrate exemplary embodiments, namely, FIG. 5 is a sectional view taken along the line IV-IV of FIG. 1, and FIG. 6 is a partial perspective view of a keypad of the portable terminal shown in FIG. 5.

The keypad is a type of input device for the portable terminal, and may use elasticity of a conductive metal dome. The metal dome may generate an input signal by connecting one contact formed at a circuit board 240 to another contact.

Referring to FIG. 5, the keypad of the portable terminal according to the one exemplary embodiment may be installed such that the circuit board 240 is inserted in the first or second body 110 or 120 and key tops 210 are externally exposed. Each key top 210 may be connected with a conductive dome 230, which contacts a contact portion of the circuit board 240 by an actuator 220. Accordingly, when the key top 210 is pressed by pressure, the conductive dome 230 contacts the contact portion by the actuator 220 and thereby an electric signal is transferred into the circuit board 240.

In order to reduce the thickness of the portable terminal 100 and simplify fabrication and assembly of the portable terminal, the circuit board 240 may be implemented as a type of flexible circuit board and formed to have a structure with two or more layers.

In the exemplary embodiment, especially, for further reducing the thickness of a keypad portion of the portable terminal, the conductive dome 230 may be mounted more into a groove within the circuit board 240. Such laminated form of the circuit board 240 will be described later.

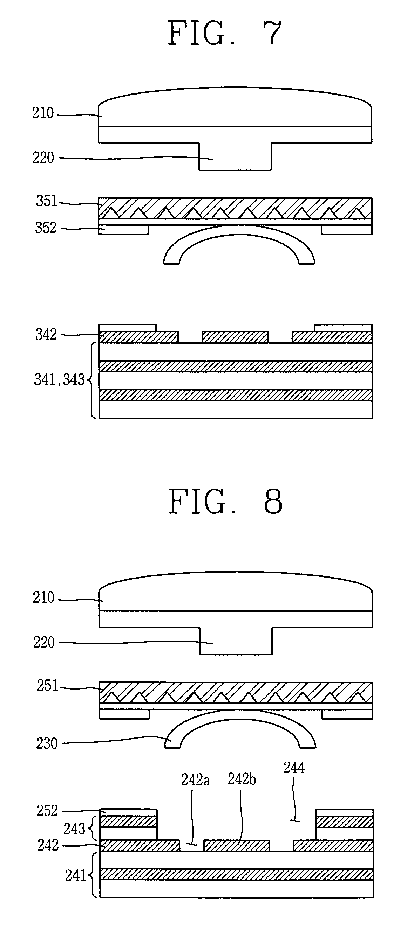

FIGS. 7 and 8 are views for comparing different laminated forms of the circuit board of the portable terminal. FIG. 7 is a sectional view of a non-concave circuit board, and FIG. 8 is a sectional view of a concave circuit board in accordance with one exemplary embodiment.

Regarding the non-concave circuit board shown in FIG. 7, a keypad may include a key top 210 and an actuator 220, and contact a conductive dome, which is attached onto a circuit board 341, 343, by a first sheet 351 and a second sheet 352. The circuit board 341, 343 may be coupled with a contact portion 342 such that the conductive dome can be mounted thereto.

Referring to FIG. 8, a circuit pattern unit 242, which is formed to be contactable with a conductive dome 230, may be disposed between a first substrate 241 and a second substrate 243, and a white printed layer 252 may be formed on the second substrate 243. Also, a light guide film 251 may be attached onto upper surfaces of the white printed layer 252 and the conductive dome 230.

Accordingly, the concave circuit board of the portable terminal can be made slimmer than a preset depth as compared with the non-concave circuit board 240.

Hereinafter, the concave circuit board according to the one exemplary embodiment will be described in more detail.

Still referring to FIG. 8, the circuit board 240 may include a first substrate 241, on which a plurality of printed layer and insulating layer are laminated, and a second substrate 243 having a dome mounting groove 244 formed to expose dome contact portions 242a and 242b. An upper surface of the first substrate 241 may be shown having a circuit pattern unit 242, which includes the first contact portion 242a contactable with an edge of the conductive dome 230, and a second contact portion 242b contactable with a center of the conductive dome 230.

Also, a conductive plate for providing the second contact portion 242b may be attached onto the first substrate 241. The conductive plate may be made of a metal with rigidity, such as stainless steel and the like, so as to support the circuit board 240.

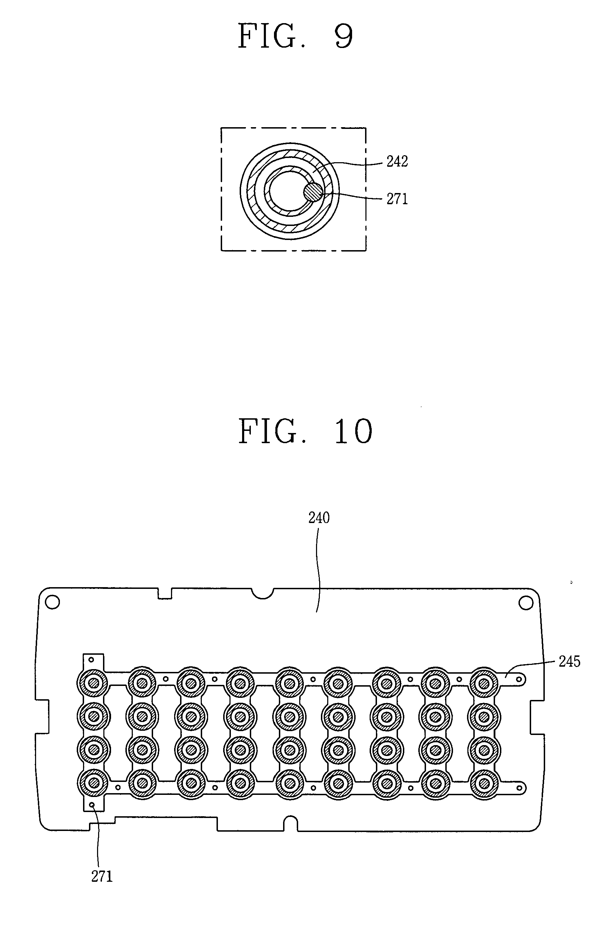

Accordingly, when the conductive dome 230 is pressed, the center of the conductive dome 230 is transformed down into the dome mounting groove 244. The center of the conductive dome 230 is thus contacted by the conductive plate, thereby generating an input operation of the portable terminal. Also, in order to make a user feel clicking better, the second contact portion 242b may protrude upwardly from the dome mounting groove 244. FIG. 9 shows the circuit pattern unit 242 and an eject hole 271.

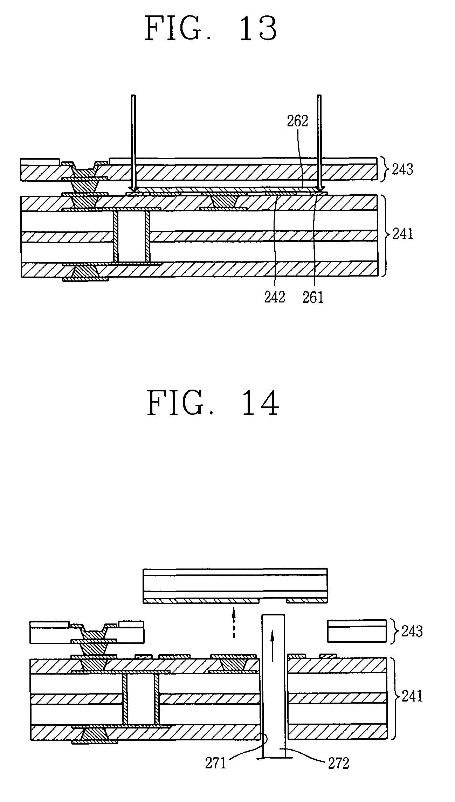

The concave circuit board may include eject holes 271 formed through the first substrate 241 and the circuit pattern unit 242. For simplification of the fabrication process, after processing the second substrate 243, a part of the processed second substrate 243 may be pushed up using a tool (e.g., a push bar 272 (see FIG. 14)), which is movably inserted through the eject hole 271 from a lower side of the first substrate 241, thereby forming the dome mounting groove 244 at the second substrate 243.

When the plurality of eject holes 271 are formed at the circuit board 240, the rigidity of the circuit board 240 may be lowered. Therefore, it is required to minimize the number of eject holes 271. The eject holes 271 are needed to separate the processed second substrate 243 from the first substrate 241. Thus, inner walls of the dome mounting grooves 244 may be connected all together so as to group the plurality of dome mounting grooves 244 into one, thereby forming a groove extending portion 245, as shown in FIG. 10. As the groove extending portion 245 is formed, the plurality of dome mounting grooves 244 may be formed by using the eject holes 271 as less as possible. Therefore, the fabrication process can be simplified and the lowering of the rigidity of the circuit board 240 can be avoided.

The white printed layer 252 may be formed on the second substrate 243. This is a configuration corresponding to the second sheet 352 of FIG. 7. The second sheet 352 includes an adhesive layer and a printed sheet. On the contrary, the white printed layer 252 may be printed directly on the upper surface of the second substrate 243, which allows more reduction of the thickness of the circuit board 240.

Also, a light guide film 251 may be attached onto the upper surfaces of the second substrate 243 and the conductive dome 230. The light guide film 251 may totally reflect or refract light to emit light in response to a key input. An adhesive layer may be disposed on one surface of the light guide film 251 such that an upper portion of the conductive dome 230 can be adhered thereto.

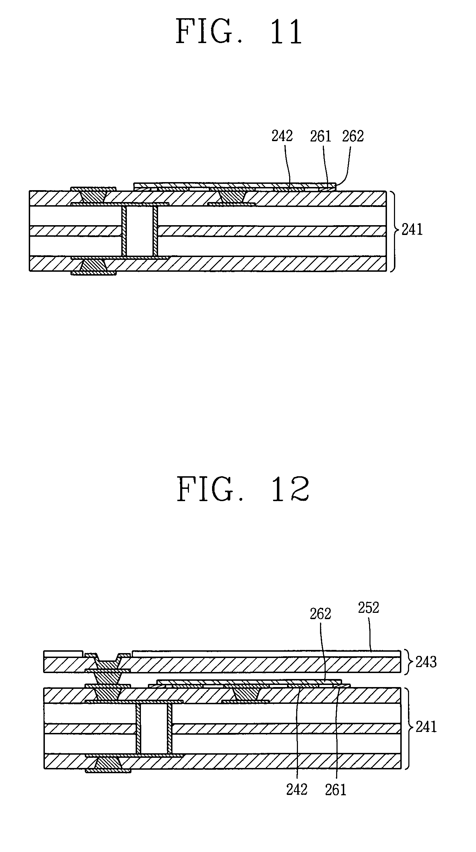

FIGS. 9 to 12 illustrate one exemplary embodiment, which is a sectional view showing a fabrication method for the concave circuit board of the portable terminal. Referring to the drawings, one or a plurality of printed layers and insulating layers may be laminated to form the first substrate 241. The circuit pattern unit 242 may be formed on the upper surface of the first substrate 241 to configure a circuit including a circuit pattern unit 242, having at least one or more dome contact portions 242a and 242b (see FIG. 8), and a stopper 261. A different type of film 262 may be attached onto the upper surfaces of the circuit pattern unit 242 and the stopper 261 to facilitate separation of the second substrate 243. Afterwards, the second substrate 243 may be laminated on the circuit pattern unit 242. The second substrate 243 formed on the circuit pattern unit 242 may then be processed to expose the circuit pattern unit 242.

Since the circuit pattern unit 242 should be formed to be exposed, a process of cutting the second substrate 243 using a cutting tool for separation is required. A laser may be used as the cutting tool. The stopper 261 as a laser stopper may be formed at the circuit pattern unit 242 using copper and thereafter a specific portion of the second substrate 243 may be cut off.

Here, the process of separating the partially cut second substrate 243 may be in trouble. As mentioned above, the eject hole 271 may be formed through the first substrate 241, and the second substrate 243 may be pushed up using a tool (e.g., a push bar 272), which can be movably inserted through the eject hole 271, thereby separating the cut second substrate 243. Also, it may be preferable to minimize the number of eject holes 271 for maintaining the rigidity of the circuit board 240. Hence, during processing of the second substrate 243, the dome mounting grooves 244 may be grouped to form a hole extending portion 245 (see FIG. 10).

After the processing of the circuit pattern unit 242, the white printed layer 252 may be formed on the upper surface of the second substrate 243 and thereafter the conductive dome 230 may be mounted in the dome mounting groove 244. Finally, the light guide film 251 may be formed on the upper surfaces of the white printed layer 252 and the conductive dome 230.

The foregoing embodiments and advantages of the constructions and methods are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A portable terminal comprising:
a first substrate(241) having printed layers and insulating layers;
a circuit pattern unit(242) formed on an upper surface of the first substrate(241) to configure a circuit, the circuit pattern unit(242) having at least one dome contact portion;
a second substrate(243) laminated on the circuit pattern unit(242) and having at least one dome mounting groove to expose the dome contact portion; and
a conductive dome(230) formed to be contactable with the dome contact portion.

2. The terminal of claim 1, further comprising at least one eject hole(271) formed through the first substrate(241) and the circuit pattern unit(242).

3. The terminal of claim 2, further comprising a groove extending portion(245) formed by extending an inner wall of each dome mounting groove on the second substrate(243) such that the at least one dome contact portion is simultaneously exposed.

4. The terminal of claim 1, wherein a stopper(261) is formed adjacent to the dome contact portion of the circuit pattern unit(242), the stopper(261) providing a reference surface such that the depth of the dome mounting groove can be adjusted.

5. The terminal of claim 1, wherein a white printed layer(252) is formed on the second substrate(243).

6. The terminal of claim 5, further comprising a light guide film(251) attached onto the white printed layer(252).

7. The terminal of claim 6, wherein an adhesive layer is disposed on one surface of the light guide film(251), and an upper portion of the conductive dome(230) is attached onto the adhesive layer.

8. A method for fabricating a portable terminal comprising:
forming a first substrate(241) by laminating at least one printed layer and at least one insulating layer;
forming a circuit pattern unit(242) to configure a circuit, the circuit including at least one dome contact portion and a stopper(261) on the first substrate(241);
attaching a different type of film on upper surfaces of the dome contact portion and the stopper(261);
laminating a second substrate(243) on the circuit pattern unit(242); and
processing the second substrate(243) formed on the dome contact portion such that the dome contact portion is exposed.

9. The method of claim 8, wherein the processing of the second substrate(243) is to cut off an upper surface of the second substrate(243) having the dome contact portion thereon, using a cutting tool, such that the dome contact portion is exposed.

10. The method of claim 9, wherein the processing of the second substrate(243) is to separate the second substrate(243) by forming an eject hole(271) through the first substrate(241) to be contactable with the dome contact portion and pushing up the second substrate(243) by using a tool, the tool inserted through the eject hole(271).

11. The method of claim 10, wherein the processing of the second substrate(243) comprises forming a groove extending portion(245) by grouping dome mounting grooves of the second substrate(243) such that the at least one dome contact portion is simultaneously exposed, so as to minimize the number of eject holes, and processing the groove extending portion(245) using the cutting tool.

12. The method of claim 8, wherein a laser is employed as the cutting tool, and the stopper(261) is made of copper.

13. The method of claim 8, further comprising forming a white printed layer(252) on the second substrate(243) to facilitate light reflection or light refraction

14. The method of claim 13, further comprising mounting the conductive dome(230) in the dome mounting groove.

15. The method of claim 14, further comprising forming a light guide film(251) on the white printed layer(252) and the conductive dome(230).
